# EUROPÄISCHE PATENTSCHRIFT

(11) **EP 2 797 729 B1**
(45) Veröffentlichungstag und Bekanntmachung des Hinweises auf die Patenterteilung: **06.09.2017**
(21) Anmeldenummer: 12812977.2
(22) Anmeldetag: 21.12.2012
(51) Int. Cl.: B29C 43/18, B29C 43/22, B29C 43/44, B29C 43/46, B29C 65/02, B29C 65/04, B29C 65/06, B29C 65/14, B29C 65/18, B29C 65/72, B29C 69/00, B29C 65/78

(54) **VERFAHREN SOWIE VORRICHTUNG ZUR HERSTELLUNG EINES FASERVERBUNDWERKSTOFFES IN FORM MINDESTENS EINES MIT EINEM POLYMER IMPRÄGNIERTEN BREIT-FASERBANDES**
METHOD AND DEVICE FOR PRODUCING A FIBRE COMPOSITE MATERIAL IN THE FORM OF AT LEAST ONE WIDE FIBRE STRIP IMPREGNATED WITH A POLYMER
PROCÉDÉ AINSI QUE DISPOSITIF POUR FABRIQUER UN MATÉRIAU COMPOSITE FIBREUX SOUS LA FORME D'AU MOINS UNE LARGE BANDE DE FIBRES IMPRÉGNÉE D'UN POLYMÈRE

(30) Priorität: 29.12.2011 DE 102011090143
(43) Veröffentlichungstag der Anmeldung: 05.11.2014
(73) Patentinhaber: Thermoplast Composite GmbH, 91474 Langenfeld (DE)
(72) Erfinder: BÖRGER, Herbert, 91474 Langenfeld (DE)
(74) Vertreter: Levpat
(86) Internationale Anmeldenummer: PCT/EP2012/076545
(87) Internationale Veröffentlichungsnummer: WO 2013/098224

(56) Entgegenhaltungen:
- EP-A2- 0 392 431
- WO-A1-84/00351
- WO-A1-2009/120736
- GB-A- 502 409
- US-A- 6 114 000
- US-A1- 2008 251 212

## Beschreibung

Der Inhalt der deutschen Patentanmeldung DE 10 2011 090 143.4 wird durch Bezugnahme hierin aufgenommen.

Die Erfindung betrifft ein Verfahren sowie eine Vorrichtung zur Herstellung eines Faserverbundwerkstoffes in Form mindestens eines mit einem Polymer imprägnierten Breit-Faserbandes. Ferner betrifft die Verbindung ein mit diesem Verfahren hergestelltes Breit-Faserband und eine mit Abschnitten derartigen Breit-Faserbänder aufgebaute Mehrschicht-V erbundstruktur.

Verfahren und Vorrichtungen zur Bearbeitung bzw. Herstellung eines Faserbandes sind bekannt aus der EP 0 392 431 A2, der US 7,993,715 B2, der US 7,964,266 B2, der GB 502,409, der DE 23 05 139 A, der EP 1 908 586 A1, der DE 10 2008 063 651 A1, der US 4,588,538 A, der EP 2 086 753 B1, der EP 1 868 808 B1, der US 2010/0075126 A1, der JP 2 688 845 B2, der JP 03 146777 A, der JP 03 251 408 A, der WO 2009/074490 A1, der US 2005/0221085 A1, der JP 2007-076224 A, der JP 2008-246782 A, der US 3,422,796 A, der US 4,059,068 A, der EP 0 397 506 A2, der US 5,798,068, der US 3,873,389 A, der US 3,993,726 A, der DE 25 07 675 A1, der US 4,300,878 A, der US 7,571,524 B2 und der US 6,114,000. Aus der DE 26 50 778 A1 ist ein Verfahren durch eine Vorrichtung zur Herstellung von Bändern bekannt. Die WO 2009/120 736 A1 offenbart ein Verfahren und eine Vorrichtung zur Herstellung von Verbundmaterial-Bändern. Die WO 84/00351 A1 offenbart ein Verfahren und eine Vorrichtung zum Laminieren von Fasern. Die US 2008/0251212 A1 beschreibt eine Vorrichtung zur Herstellung breiter Polymer-Bänder.

Es ist eine Aufgabe der vorliegenden Erfindung, ein Verfahren bzw. eine Vorrichtung der eingangs genannten Art derart weiterzubilden, dass ein hinsichtlich seiner Eigenschaften über die gesamte Breite möglichst homogenes Breit-Faserband resultiert.

Diese Aufgabe wird erfindungsgemäß gelöst durch ein Verfahren mit dem im Anspruch 1 angegebenen Merkmalen und durch eine Vorrichtung mit dem im Anspruch 6 angegebenen Merkmalen.

Erfindungsgemäß wurde erkannt, dass ein Aufheizen der Einzel-Faserbänder über deren gesamte Breite zu einer Homogenisierung des resultierenden Breit-Faserbandes über dessen gesamte Breite führt. Überraschend hat sich herausgestellt, dass hierzu ein Erhitzen alleine in den Stoßbereichen nicht ausreicht. Es wurde erkannt, dass das Aufheizen über die gesamte Breite der Einzel-Faserbänder zu Homogenisierungseffekten nicht nur in den Stoßbereichen der über die Seitenkanten aneinander angrenzenden Einzel-Faserbändern, sondern auch innerhalb der Einzel-Faserbänder selbst führt. Es resultiert ein Breit-Faserband, welches auch dort über homogene Materialeigenschaften verfügt, wo die ursprünglichen Einzel-Faserbänder miteinander verschweißt wurden. Das resultierende Breit-Faserband kann für anspruchsvolle Faserverbundbauteile genutzt werden, bei denen eine Abzeichnungsfreiheit über die gesamte Fläche gefordert ist, insbesondere für Karosseriebauteile bei Fahrzeugen. Die Einzel-Faserbänder, die als Ausgangsmaterial zur Herstellung des Breit-Faserbandes zum Einsatz kommen, können eine Vielzahl von EndlosFasern aufweisen. Alternativ oder zusätzlich ist es möglich, dass als Faserband ein Gewebeband zum Einsatz kommt, bei dem auch anders als in Längsrichtung orientierte Einzelfasern vorhanden sind. Auch ein sonstiges, bandförmiges Fasergebilde, beispielsweise aus einem Non-Woven Fabric, oder ein Textilgebilde kann als Faserband zum Einsatz kommen. Beim Verschweißen der Stoßbereiche der zusammengeführten Einzel-Faserbänder kann eine Entlüftung entgegen der Förderrichtung der Einzel-Faserbänder stattfinden. Das Herstellungsverfahren kann kontinuierlich durchgeführt werden. Verfahrensprodukt kann ein endloses Breit-Faserband sein. Es können Breit-Faserbänder mit Breiten im Bereich mehrerer Meter hergestellt werden. Typische Breiten des Breit-Faserbandes liegen zwischen 280 mm und 1800 mm. Auch noch größere Breiten sind möglich. Beim Zusammenführen der Einzel-Faserbänder in der Heiz-Druckbeaufschlagungseinrichtung sind zwei Fälle prinzipiell zu unterscheiden: Im ersten Fall haben beim Einlaufen der Einzel-Faserbänder in die Heiz-Druckbeaufschlagungseinrichtung benachbarte Seitenkanten der Einzel-Faserbänder zunächst einen Abstand zueinander, der sich beim Heizen der Einzel-Faserbänder auf eine Temperatur oberhalb des Polymer-Schmelzpunktes und beim Druckaufbringen dann verringert, da das Faserverbundmaterial der Einzel-Faserbänder quer zur Förderrichtung der Einzel-Faserbänder auseinander läuft und sich hierdurch noch im Eintrittsbereich ein Zwischenraum zwischen den benachbarten Seitenkanten der zusammengeführten Einzel-Faserbänder schließt, sodass diese in Stoßbereichen aneinander anliegen. Im zweiten Fall werden die Einzel-Faserbänder in die Heiz-Druckbeaufschlagungseinrichtung so eingeführt, dass die Einzel-Faserbänder schon beim Einführen über ihre benachbarten Seitenkanten in Stoßbereichen aneinander anliegen. In diesem Fall liegt beim Einführen der Einzel-Faserbänder in die Heiz-Druckbeaufschlagungseinrichtung kein Zwischenraum zwischen benachbarten Seitenkanten der zusammengeführten Einzel-Faserbänder vor. Die in der Heiz-Druckbeaufschlagungseinrichtung zusammengeführten Einzel-Faserbänder liegen in den Stoßbereichen so aneinander an, dass sie nicht miteinander überlappen. In den Stoßbereichen kommt es also nicht zu einer Materialverdickung des Faserbandes. Das Heizen über die gesamte Breite der Einzel-Faserbänder quer zu deren Förderrichtung kann mit über die gesamte Breite einheitlicher Temperatur erfolgen.

Das Aufheizen der Einzel-Faserbänder im Heizschritt kann auf eine Temperatur erfolgen, die in einem Bereich zwischen 1 K und 30 K oberhalb des Schmelz- bzw. Erweichungspunktes des Polymers liegt. Diese Heiztemperatur kann im Bereich zwischen 1 K und 10 K oder im Bereich zwischen 2 K und 5 K über diesen Schmelz- bzw. Erweichungspunkt liegen. Soweit die Bearbeitungstemperatur entsprechend knapp oberhalb des Schmelz- oder Erweichungspunktes des Polymers gehalten wird, ergibt sich eine erwünschte Reststabilität insbesondere der Polymer-Imprägnierung der erhitzten Einzel-Faserbänder, was bei den nachfolgenden Schritten des Herstellungsverfahrens vorteilhaft ist. Ein Bearbeiten des Faserverbundwerkstoffes in diesem Bearbeitungstemperaturbereich kann ein Fertigungsergebnis beim Verschweißen der Stoßbereiche der zusammengeführten Einzel-Faserbänder verbessern. Zudem kann eine Verteilung der Einzelfasern in den Einzel-Faserbändern gleichmäßig bleiben. Zudem kann eine thermische Schädigung der Komponenten des Faserverbundwerkstoffes, insbesondere des Polymers, vermieden werden.

Während des Heizens wird eine Scher-Vibrationsbeaufschlagung auf die zusammengeführten Einzel-Faserbänder mit der Heiz-Druckbeaufschlagungseinrichtung aufgebracht. Eine Scherkraft wird hierbei längs einer Scherkraft-Beaufschlagungsrichtung auf die Einzel-Faserbänder ausgeübt, die senkrecht auf einer Förderrichtung und senkrecht auf einer Band-Normalen steht. Eine derartige Scher-Vibrationsbeaufschlagung führt zu einer wirksamen homogenen Verteilung der Polymerschmelze in die gesamte Faser-Volumenstruktur des Breit-Faserbandes. Gasvolumina, die sich noch innerhalb der Einzel-Faserbänder und insbesondere im Stoßbereich benachbart aneinander anliegender Einzel-Faserbänder befinden, können hierdurch effizient ausgetrieben werden. Die Scher-Vibrationsbeaufschlagung wird mittels der Heiz-Druckbeaufschlagungseinrichtung erzeugt. Als Resultat der Scher-Vibrationsbeaufschlagung erfolgt ein Aufspreizen der Einzel-Faserbänder, das heißt Filamente der Einzel-Faserbänder werden gegeneinander verlagert, was eine Benetzung der Filamente mit der aufgeschmolzenen Polymermatrix verbessert. Dieses Aufspreizen kann mit einer Verringerung der Bandstärke des hergestellten Breit-Faserbandes im Vergleich zur Bandstärke der Einzel-Faserbänder einhergehen. Beim Aufspreizen ist es von besonderem Vorteil, wenn die Einzel-Faserbänder in einem Bearbeitungstemperaturbereich verarbeitet werden, der, wie vorstehend bereits erläutert, in einem relativ schmalen Bereich knapp oberhalb des Schmelz- bzw. Erweichungspunktes des Polymers liegt.

Bei einem Herstellverfahren nach Anspruch 2 findet über die gesamte Breite des Breit-Faserbandes eine Umlagerung der Faserstrukturen innerhalb der Einzel-Faserbänder statt, was eine Homogenisierung der Materialeigenschaften des Breit-Faserbandes über dessen Breite nochmals verbessert. Eine Verringerung der Bandstärke der Einzel-Faserbänder während der Herstellung kann als Resultat eines kombinierten Heizens und Druckbeaufschlagens in der Heiz-Druckbeaufschlagungseinrichtung geschehen. Diese Bandstärke-Reduktion geht einher mit einem Auseinanderlaufen der Einzel-Faserbänder quer zu deren Förderrichtung im Eintrittsbereich der Heiz-Druckbeaufschlagungseinrichtung, so dass sich Zwischenräume zwischen benachbarten Seitenkanten der Einzel-Faserbänder schließen, bis diese in Stoßbereichen aneinander anliegen und miteinander verschweißen können.

Ein Abkühlen nach Anspruch 3 führt zu einem Breit-Faserband mit definierter Stärke und mit definierten Materialparametern. Alternativ kann vor einem endgültigen Abkühlen der zum Breit-Faserband miteinander verschweißten Einzel-Faserbänder auch eine drucklose Förderstrecke zurückgelegt werden.

Ein Vorheizen nach Anspruch 4 ermöglicht ein schnelles Erreichen des Bearbeitungstemperaturbereichs beim Heizen im Eintrittsbereich der Heiz-Druckbeaufschlagungseinrichtung. Das Vorheizen kann längs eines geringen Förderweges erfolgen. Der gesamte Heiz-Förderweg, längs dem die Einzel-Faserbänder bis auf die Bearbeitungstemperatur aufgeheizt werden, kann im Bereich zwischen 5 mm und 100 mm liegen.

Eine Weiterverarbeitung zu einem Laminat-Schichtaufbau nach Anspruch 5 ermöglicht die Herstellung von Faserverbundbauteilen für anspruchsvolle Einsatzbereiche.

Die Vorteile einer Vorrichtung nach Anspruch 6 entsprechen denen, die vorstehend unter Bezugnahme auf das erfindungsgemäße Verfahren bereits erläutert wurden. Eine Führungseinrichtung der Transporteinrichtung der Herstellungsvorrichtung vor der Heiz-Druckbeaufschlagungseinrichtung kann bei einer ersten Ausführung so gestaltet sein, dass die Einzel-Faserbänder mit Zwischenräumen zwischen benachbarten Seitenkanten in die Heiz-Druckbeaufschlagungseinrichtung eingeführt werden, wobei sich diese Zwischenräume dann erst durch die kombinierte Wirkung von Heizen und Druckbeaufschlagung in der Heiz-Druckbeaufschlagungseinrichtung schließen. Bei einer alternativen Ausführung der Herstellungsvorrichtung ist die Führungseinrichtung so gestaltet, dass die Einzel-Faserbänder schon beim Einlaufen in den Eintrittsbereich so zusammengeführt sind, dass benachbarte Seitenkanten der Einzel-Faserbänder in Stoßbereichen aneinander anliegen.

Die beiden miteinander zusammen wirkenden Pressstempel können so ausgeführt sein, dass ein Eintrittsbereich in einen Haupt-Pressabschnitt zwischen den Pressstempeln sich verjüngend, beispielsweise sich konisch verjüngend, ausgeführt ist.

Als Druckeinheit der Heiz-Druckbeaufschlagungseinrichtung kann neben den Varianten "Pressstempel" und "Walzenpaar" auch eine Intervallheißpresse, eine isobare Doppelband- oder Membranpresse, ein Kalander oder eine Kombination aus diesen Druckeinheiz-Varianten zum Einsatz kommen.

Eine Vorheizeinheit nach Anspruch 10 kann als Widerstands-Heizeinheit, als Infrarot-Heizeinheit, als Kontakt-Heizeinheit oder als Hochfrequenz-Heizeinheit ausgeführt sein.

Die Vorteile eines Breit-Faserbandes nach Anspruch 12 und einer Mehrschicht-Verbundstruktur nach Anspruch 13 entsprechen denen, die vorstehend unter Bezugnahme auf das Herstellungsverfahren und die Herstellungsvorrichtung bereits erläutert wurden. Die Mehrschicht-Verbundstruktur kann insbesondere zum Aufbau eines Fahrzeug-Karosseriebauteils oder einer Fahrzeug-Rahmenkomponente zum Einsatz kommen. Derartige Verbundstrukturen sind leicht und stabil. Die Mehrschicht-Verbundstruktur kann zwei Lagen, drei Lagen, fünf Lagen oder eine noch größere Anzahl von Lagen aufweisen.

Ausführungsbeispiele der Erfindung werden nachfolgend anhand der Zeichnungen näher erläutert. In dieser zeigen:
- Fig. 1: perspektivisch und schematisch eine Vorrichtung zur Herstellung eines Faserverbundwerkstoffes in Form eines mit einem Polymer imprägnierten Breit-Faserbandes;
- Fig. 2: eine Ausschnittsvergrößerung aus Fig. 1 im Bereich eines Eintrittsbereiches einer Heiz-Druckbeaufschlagungseinrichtung der Herstellungsvorrichtung;
- Fig. 3: einen Querschnitt längs einer Fasertransportrichtung durch einen Ausschnitt der Heiz-Druckbeaufschlagungseinrichtung im Bereich zweier miteinander zusammenwirkender Pressstempel von dieser;
- Fig. 4: perspektivisch und ebenfalls schematisch eine Alternative Heiz-Druckbeaufschlagungseinrichtung einer Herstellungsvorrichtung für einen Faserverbundwerkstoffes in Form eines mit einem Polymer imprägnierten Breit-Faserbandes.

Eine Vorrichtung 1 dient zur Herstellung eines Faserverbundwerkstoffes in Form eines mit einem Polymer imprägnierten Breit-Faserbandes 2.

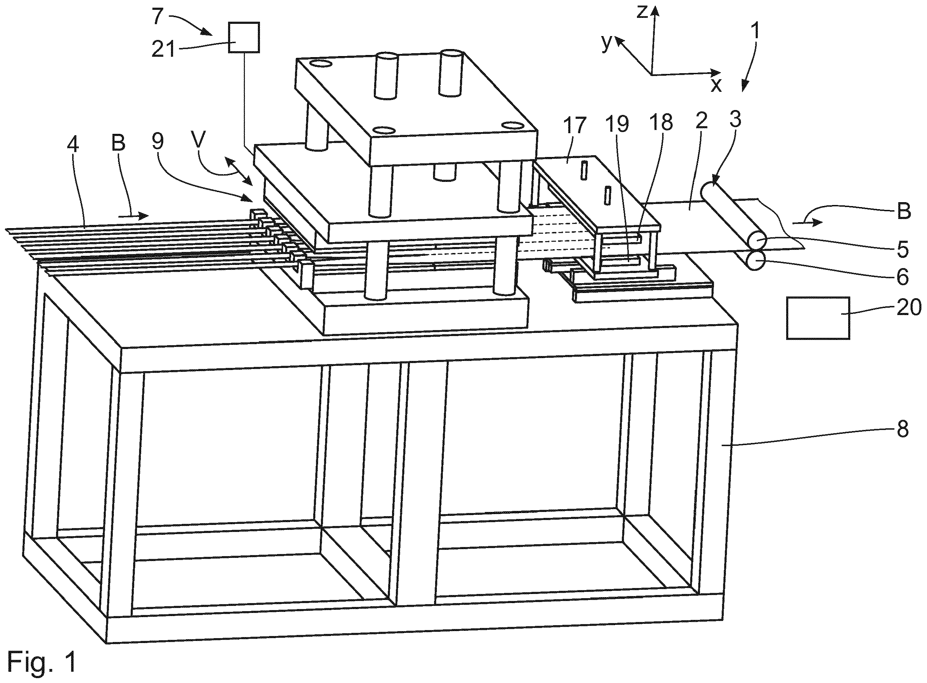

Die Vorrichtung hat eine Transporteinrichtung 3 zum Zuführen einer Mehrzahl von vorgefertigten Einzel-Faserbändern 4 und zum Transportieren der Einzel-Faserbänder 4 längs eines Bearbeitungsweges B. Der Vorrichtung 1 werden beim in der Figur 1 dargestellten Beispiel sechs Einzel-Faserbänder 4 zugeführt. Auch eine sehr viel größere Anzahl von Einzel-Faserbändern 4 kann der Vorrichtung 1 zugeführt werden, beispielsweise 30 der Einzel-Faserbänder 4. Zur Erleichterung von Lagebeziehungen wird nachfolgend ein kartesisches xyz-Koordinatensystem verwendet. Eine Transportrichtung x verläuft in der Figur 1 nach rechts. Eine z-Richtung verläuft senkrecht zu einer xy-Bandebene des Breit-Faserbandes 2 und der Einzel-Faserbänder 4.

Die Einzel-Faserbänder 4 haben in der y-Richtung eine Breite von etwa 60 mm. Als Fasermaterial für das Roh-Faserband 4 kann Glasfaser, Kohlefaser, Aramid, Basalt, Polyester oder Naturfaser zum Einsatz kommen. Die Fasern können zu Rovings bzw. zu Fasergarnen zusammengefasst sein. Bei den Rovings kann es sich um endlose Multi-Filamente ohne Drall handeln. Die Rovings der Einzel-Faserbänder 4 können mit einem Schlichtmittel, der sogenannten Schlichte, behandelt sein.

Das Fasermaterial ist in eine Matrix eines Imprägnier-Polymers eingebettet. Als Imprägnier-Polymer kann ein Thermoplast zum Einsatz kommen. Beispiele hierfür sind PE (Polyethylen), PP (Polypropylen), andere Polyolefine sowie Blends dieser Polyolefine, SAN (Styrol/Acrylnitril), PA (Polyamid), zum Beispiel PA 6, PA 6.6, PA 6.6T, PA 12, PA 6.10, ASA (Acrylnitril/Styrol/Acrylester), PC (Polycarbonat), PBT (Polybutylenterephthalat), PET (Polyethylentrephthalat), Polymerblends, zum Beispiel PC/PBT, PPS (Polyphenylensulfid), PSU (Polysulfon), PES (Polyethersulfon), PEEK (Polyetheretherketon). Als Imprägnier-Polymer kann auch ein Duroplast zum Einsatz kommen, welches als Schmelze im B-Stadium (Resitol) aufgetragen werden kann.

Die Transporteinrichtung 3 ist in der Figur 1 schematisch als Walzenpaar mit Abzugswalzen 5,6 dargestellt. Alternativ oder zusätzlich kann auch eingangseitig der Vorrichtung 1, also im Bereich eines Förder- bzw. Bearbeitungsweges B der Einzel-Faserbänder 4 eine Fördereinheit der Transporteinrichtung 3 vorgesehen sein.

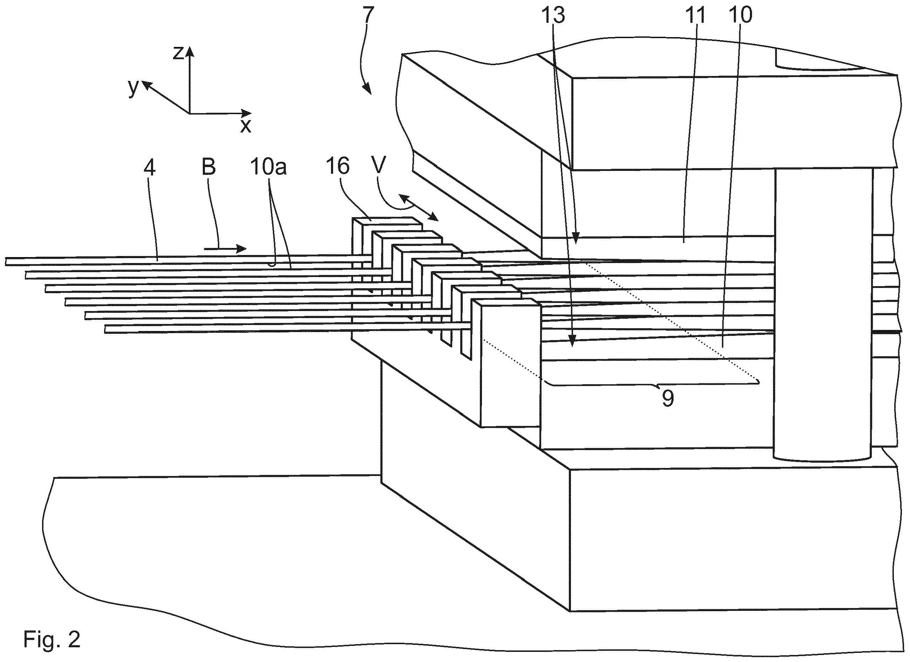

Die Vorrichtung 1 hat eine Heiz-Druckbeaufschlagungseinrichtung 7, die von einem Maschinengestell 8 getragen wird. In der Heiz-Druckbeaufschlagungseinrichtung 7 werden die Einzel-Faserbänder 4 zusammengeführt. In einem Eintrittsbereich 9, der in der Figur 2 vergrößert dargestellt ist, werden die Einzel-Faserbänder 4 nebeneinander in die Heiz-Druckbeaufschlagungseinrichtung 7 so gefördert, dass einander zugewandte, benachbarte Seitenkanten 10a der zusammengeführten Einzel-Faserbänder 4, die zunächst von einander beabstandet sind, in Stoßbereichen aneinander anliegen.

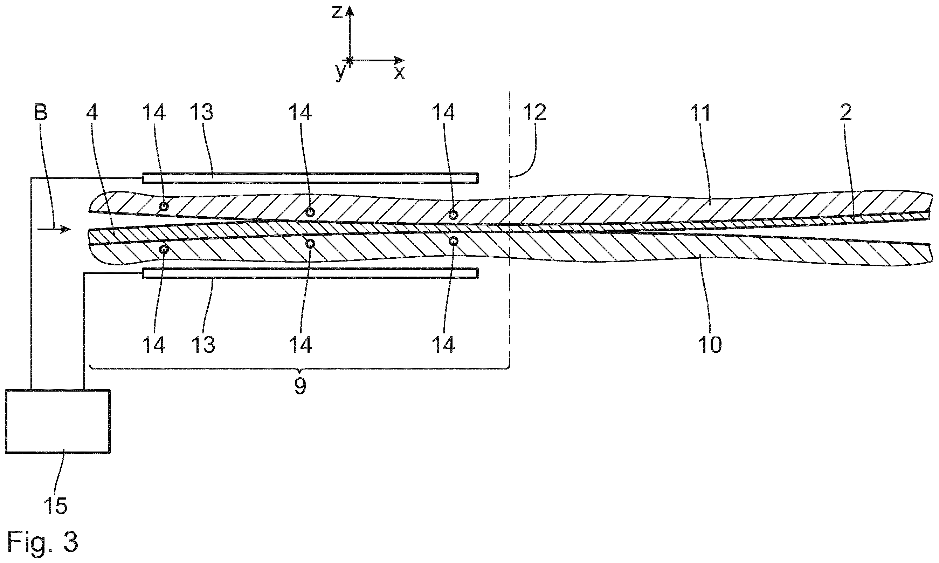

Die Heiz-Druckbeaufschlagungseinrichtung 7 hat zwei miteinander zusammenwirkende Pressstempel, nämlich einen unteren Pressstempel 10 und einen oberen Pressstempel 11. Beide Pressstempel 10, 11 sind konvex ausgeführt, was in der xz-Schnittdarstellung nach Figur 3 deutlich wird. Der Schnitt nach Figur 3 ist durch ein von links einlaufendes Einzel-Faserband 4 geführt. Dieses hat eine Stärke senkrecht zur Bandebene von 0,35 - 0,4 mm. Im Eintrittsbereich 9 verengt sich ein Abstand der beiden Pressstempel 10, 11 zueinander bis auf einen Minimalabstand in einer Hauptpressebene 12, der 0,2 mm beträgt.

Zur besseren Anschaulichkeit sind die beiden Pressstempel 10, 11 in den Figuren 1 und 2 nicht in einer Pressstellung, sondern mit weit in z-Richtung voneinander beabstandeten Stempeln 10, 11 gezeigt. Eine Pressstellung der Pressstempel 10, 11 ist in der Figur 3 dargestellt.

Auch Ausführungen der Heiz-Druckbeaufschlagungseinrichtung 7 sind möglich, bei denen nur einer der beiden Pressstempel 10, 11 konvex und der andere beispielsweise mit ebener Pressfläche ausgeführt ist. Auch Konvex/Konkav-Gestaltungen der Pressstempel 10, 11 sind möglich, wobei ein Krümmungsradius des konvexen Pressstempels kleiner ist als ein Krümmungsradius des konkaven Pressstempels.

Die Heiz-Druckbeaufschlagungseinrichtung 7 hat im Eintrittsbereich 9 eine Heizeinheit 13 zum Heizen der nebeneinander geförderten Einzel-Faserbänder 4 auf eine Temperatur oberhalb eines Schmelzpunktes des Polymers, wobei das Heizen über eine gesamte Breite der Einzel-Faserbänder 4 quer zu deren Förderrichtung erfolgt. Die Heizeinheit 13 ist in die beiden Pressstempel 10, 11 integriert. Die Heiz-Druckbeaufschlagungseinrichtung 7 kann nach Art einer Intervallheißpresse ausgeführt sein. Die Heizeinheiten 13 können durch Widerstands-Heizelemente ausgeführt sein. Aufgrund der Wirkung der Heizeinheit 13 sind die beiden Pressstempel 10, 11 im Eingangsbereich 9 auf einer Temperatur oberhalb des Polymer-Schmelzpunktes der Einzel-Faserbänder 4 und geben Wärme über die gesamte Breite der Pressstempel 10, 11 auf die Einzel-Faserbänder ab. Die Polymermatrix wird dabei über die gesamte Breite der Einzel-Faserbänder 4 aufgeschmolzen.

Die Pressstempel 10, 11 stellen eine Druckeinheit zum Aufbringen eines Drucks auf die nebeneinander geförderten, aufgeheizten Einzel-Faserbänder 4 mit der Heiz-Druckbeaufschlagungseinrichtung 7 dar.

Die Heizeinheiten 13 der Pressstempel 10, 11 sind so ausgeführt, dass diese im gesamten Eintrittsbereich 9 der Heiz-Druckbeaufschlagungseinrichtung 7, also bis zur Hauptpressebene 12 beheizt werden. Ab der Hauptpressebene 12 sind die Pressstempel 10, 11 längs des weiteren Bearbeitungsweges B nicht weiter beheizt, so dass die Temperatur zwischen den Pressstempeln 10, 11 wieder abnimmt. Die Presszone im Bearbeitungsweg nach der Hauptpressebene 12 stellt gleichzeitig eine Abkühlzone für das in diesem Bereich vorliegende Breit-Faserband 2 dar.

Die aufgeheizten und miteinander verschweißten Einzel-Faserbänder 4 werden also noch während der Druckbeaufschlagung mit der Heiz-Druckbeaufschlagungseinrichtung 7 unter eine Temperatur-Untergrenze des Bearbeitungsbereichs abgekühlt, so dass die Polymermatrix wieder erstarrt.

Die Heizeinheiten 13 längs des Eintrittsbereichs 9 stellen gleichzeitig eine Temperiereinheit zum Halten der zusammengeführten Einzel-Faserbänder 4 in einem Bearbeitungstemperaturbereich oberhalb des Polymer-Schmelzpunktes dar, bis die Stoßbereiche der zusammengeführten Einzel-Faserbänder 4 miteinander verschweißen. Die Heizeinheiten 13 (vergleiche Figur 3) können in nicht näher dargestellter Weise mit Temperatursensoren 14 zusammenwirken, die in geringem Abstand zu den Pressflächen der Pressstempel 10, 11 in diesen angeordnet sind und eine Temperatur in einer Presszone im Eintrittsbereich 9 messen. Die Temperatursensoren 14 und die Heizeinheiten 13 stehen hierzu mit einer Steuer/Regeleinheit 15 in Signalverbindung, die ebenfalls Teil der Temperiereinheit ist.

Die Bearbeitungstemperatur liegt im Bereich von wenigen 100 °C, beispielsweise im Bereich von 250 °C. Eine Temperatur des Roh-Faserbandes 4 von 380 °C wird nicht überschritten. Bei bestimmten, besonders temperaturbeständigen Materialien kann auch eine höhere Heiztemperatur zum Einsatz kommen, beispielsweise 400 °C. Auch noch höhere Heiztemperaturen für das Roh-Faserband 4 sind möglich.

Zusätzlich zu den Heizeinheiten 13 hat die Heiz-Druckbeaufschlagungseinrichtung 7 noch eine Vorheizeinheit 16 zum Vorheizen der Einzel-Faserbänder 4 vor dem Zusammenführen der Einzel-Faserbänder 4 im Eintrittsbereich 9 der Heiz-Druckaufschlagungseinrichtung 7. Die Vorheizeinheit 16 ist den beiden Pressstempel 10, 11 im Bearbeitungsweg B der Vorrichtung 1 vorgeordnet. Die Vorheizeinrichtung 16 dient gleichzeitig einer Führung der Einzel-Faserbänder 4 in den Eintrittsbereich 9.

Die Vorheizeinheit 16 und/oder die Heizeinheiten 13 können als Infrarot-, Kontakt- oder Hochfrequenz-Heizeinheiten ausgeführt sein.

Den Pressstempeln 10, 11 im Bearbeitungsweg B nachgeordnet ist eine Abkühleinheit 17 in Form einer Kühlpresse zum Abkühlen der zum Breit-Faserband 2 miteinander verschweißten Einzel-Faserbänder 4. Abkühl-Pressstempel 18, 19 können über ein Wärmeträgermedium, beispielsweise über Kühlwasser, gekühlt sein, welches über Fluidkanäle geführt wird, die durch die Abkühl-Pressstempel 18, 19 verlaufen.

Der Transporteinrichtung 3 im Bearbeitungsweg B nachgeordnet kann eine Lege- und Laminiervorrichtung 20 sein, über die aus einer Mehrzahl der hergestellten Breit-Faserbänder 2 ein Laminat-Schichtaufbau hergestellt wird. Hierzu wird das Breit-Faserband 2 konfektioniert, gegebenenfalls schichtweise unterschiedlich ausgerichtet und die Schichten aus dem Breit-Faserband 2 werden dann miteinander verbunden.

Zusätzlich kann die Heiz-Druckbeaufschlagungseinrichtung 7 eine Scher-Vibrationsbeaufschlagungseinheit aufweisen, mit der auf die zusammengeführten Einzel-Faserbänder eine Scher-Kraft längs der y-Richtung, also senkrecht sowohl zur Band-Normalen als auch zur Förderrichtung, auf die Einzel-Faserbänder 4 ausgeübt wird. Hierzu kann der untere Pressstempel 10 und/oder der obere Pressstempel 11 mit einer Vibrationseinrichtung 21 verbunden sein, die in der Figur 1 ebenfalls schematisch dargestellt ist. Die Richtung einer Vibrationsbeaufschlagung V durch die Vibrationseinrichtung 21 ist in der Figur 1 durch einen Doppelpfeil verdeutlicht.

Die Druckbeaufschlagung durch die Heiz-Druckbeaufschlagungseinrichtung 7 und die Scher-Vibrationsbeaufschlagung über die Vibrationseinheit 21 erzeugen ein Aufspreizen der Einzel-Faserbänder 4, das heißt Filamente der Einzel-Faserbänder 4 werden gegeneinander verlagert, was zu einer Verbesserung eines Benetzens der Filamente mit der Polymermatrix insbesondere im Stoßbereich der aneinander angrenzenden Seitenkanten 10a der zusammengeführten Einzel-Faserbänder 4 führt. Mit dem Aufspreizen der Einzel-Faserbänder einher geht eine Verringerung der Bandstärke, also eine Verringerung der z-Dimension des Faserbandes.

Bei der Herstellung des Breit-Faserbandes 2 werden die Einzel-Faserbänder 4 in der Vorheizeinheit 16 zunächst auf einer sehr kurzen Strecke längs des Bearbeitungsweges B, beispielsweise in einem Wegbereich zwischen 5 mm und 100 mm, auf eine Bearbeitungstemperatur oberhalb eines Schmelz- bzw. Erweichungspunktes des Polymers erwärmt. Die Transporteinrichtung 3 sorgt für eine Transportgeschwindigkeit der Faserbänder im Bereich zwischen 50 m/h und 200 m/h.

Die aufgeschmolzenen Einzel-Faserbänder 4 laufen anschließend in den Eintrittsbereich 9 ein, wobei durch die Druckbeaufschlagung über die Pressstempel 10, 11 die Einzel-Faserbänder 4 in der y-Dimension auseinanderlaufen, sich also verbreitern, und in der z-Dimension komprimiert werden. Mit diesem Auseinanderlaufen der Einzel-Faserbänder 4 geht eine Verringerung des Abstandes zwischen den Seitenkanten 10a benachbarter Einzel-Faserbänder 4 einher. Dies geschieht so lange bis die Einzel-Faserbänder 4 über ihre benachbarten Seitenkanten aneinander anliegen, wobei dann die Einzel-Faserbänder, die immer noch in einem Temperaturbereich oberhalb des Polymer-Schmelzpunktes vorliegen, miteinander verschweißen. Aufgrund der Tatsache, dass die Einzel-Faserbänder 4 durch die Heizeinheiten 13 über ihre gesamte Breite im Eintrittsbereich 9 oberhalb des Polymer-Schmelzpunktes gehalten werden, erfolgt beim Verschweißen der Einzel-Faserbänder 4 eine praktisch vollständige Homogenisierung des Faser-/Matrix-Verbundes über die gesamte Breite des dann entstehenden Breit-Faserbandes 2. Beim Verschweißen der Einzel-Faserbänder 4 im Eintrittsbereich 9 findet eine Entlüftung entgegen der Förderrichtung der Einzel-Faserbänder 4 statt.

Die Herstellung erfolgt so, dass eine Bandstärke des hergestellten Breit-Faserbandes 2 geringer ist als eine Bandstärke der Einzel-Faserbänder 4.

Während der Druckbeaufschlagung erfolgt gleichzeitig eine Scher-Vibrationsbeaufschlagung über die Vibrationseinheit 21, was, wie schon erwähnt, eine Verbesserung des Benetzens der Filamente innerhalb der Faserbänder herbeiführt. Nach der Hauptpressebene 12 wird das zunächst noch geschmolzene vorliegende Breit-Faserband 2 definiert unter den Polymer-Schmelzpunkt abgekühlt.

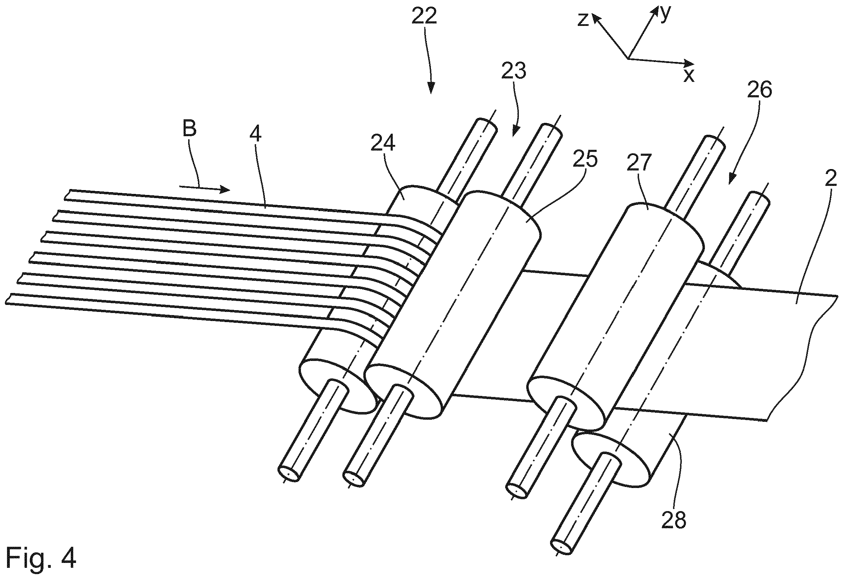

Figur 4 zeigt eine alternative Heiz-Druckbeaufschlagungseinrichtung 22. Diese umfasst ein erstes Heiz-Walzpaar 23 mit Heizwalzen 24, 25 und ein im Bearbeitungsweg B nachgeordnetes Kühl-Walzenpaar 26 mit Kühlwalzen 27, 28. Die Funktion des Heiz-Walzenpaar 23 entspricht der Funktion der Pressstempel 10, 11 im Eintrittsbereich 9. Die Funktion der Kühlwalzen 27, 28 entspricht der Funktion der Pressstempel 10, 11 nach der Hauptpressebene 12 bzw. der Funktion der Abkühleinheit 17. Die zwischen die Heizwalzen 24, 25 einlaufenden Einzel-Faserbänder 4 werden dort aufgeschmolzen und aufgespreizt, zusammengeführt bis benachbarte Seitenkanten der Einzel-Faserbänder in den Stoßbereichen aneinander anliegen und miteinander verschmolzen. Nach Durchlaufen der Heiz-Walzenpaares 23 liegt das zunächst noch aufgeschmolzene Breit-Faserband 2 vor, das dann beim Durchlaufen durch das Kühl-Walzenpaar 26 definiert auf eine Temperatur unterhalb des Polymer-Schmelzpunktes gebracht wird.

Alternativ kann für die Druckeinheit der Heiz-Druckbeaufschlagungseinrichtung 7 bzw. 22 eine Doppelwand- oder Membranpresse, ein Kalander oder eine Kombination entsprechender Druckvorrichtungen zum Einsatz kommen.

Das Herstellungsverfahren kann für amorphe sowie für teilkristalline Thermoplast-Polymerwerkstoffe sowie deren Blends und Compounds eingesetzt werden.

## Patentansprüche

1. Verfahren zur Herstellung eines Faserverbundwerkstoffes in Form mindestens eines mit einem Polymer imprägnierten Breit-Faserbandes (2) mit folgenden Schritten:
- Bereitstellung einer Mehrzahl von vorgefertigten Einzel-Faserbänder (4), die jeweils eine mit dem Polymer imprägnierte Filament-Struktur aufweisen,
- Zusammenführen der Einzel-Faserbänder (4) in einer Heiz-Druckbeaufschlagungseinrichtung (7; 22), wobei die Einzel-Faserbänder (4) in einem Eintrittsbereich (9) in die Heiz-Druckbeaufschlagungseinrichtung (7; 22) nebeneinander so gefördert werden, dass benachbarte Seitenkanten (10a) der zusammengeführten Einzel-Faserbänder (4) in Stoßbereichen aneinander anliegen,
- Heizen der nebeneinander geförderten Einzel-Faserbänder (4) mit der Heiz-Druckbeaufschlagungseinrichtung (7; 22) auf eine Temperatur oberhalb eines Schmelzpunktes des Polymers, wobei das Heizen über eine gesamte Breite der Einzel-Faserbänder (4) quer (y) zu deren Förderrichtung (x) erfolgt,
- Aufbringen eines Drucks auf die nebeneinander geförderten, aufgeheizten Einzel-Faserbänder (4) mit der Heiz-Druckbeaufschlagungseinrichtung (7; 22),
- Halten der zusammengeführten Einzel-Faserbänder (4) in einem Bearbeitungstemperaturbereich oberhalb des Polymer-Schmelzpunktes, bis die Stoßbereiche der zusammengeführten Einzel-Faserbänder (4) miteinander verschweißt sind,
- Abkühlen der zum Breit-Faserband (2) miteinander verschweißten Einzel-Faserbänder (4), **dadurch gekennzeichnet, dass** während des Heizens eine Scher-Vibrationsbeaufschlagung auf die zusammengeführten Einzel-Faserbänder (4) mit der Heiz-Druckbeaufschlagungseinrichtung (7; 22) aufgebracht wird, wobei eine Scherkraft längs einer Scherkraft-Beaufschlagungseinrichtung (y) auf die Einzel-Faserbänder (4) ausgeübt wird, die senkrecht auf einer Förderrichtung (x) und senkrecht auf einer Band-Normalen (z) steht.

2. Verfahren nach Anspruch 1, **dadurch gekennzeichnet, dass** die Herstellung so erfolgt, dass eine Bandstärke des hergestellten Breit-Faserbandes (2) geringer ist als die Bandstärke der Einzel-Faserbänder (4).

3. Verfahren nach einem der Ansprüche 1 bis 2, **dadurch gekennzeichnet, dass** die aufgeheizten und miteinander verschweißten Einzel-Faserbänder (4) noch während der Druckbeaufschlagung mit der Heiz-Druckbeaufschlagungseinrichtung (7; 22) unter eine Temperatur-Untergrenze des Temperaturbearbeitungsbereichs abgekühlt werden.

4. Verfahren nach einem der Ansprüche 1 bis 3, **gekennzeichnet durch** ein Vorheizen der Einzel-Faserbänder (4) vor dem Zusammenführen in den Eintrittsbereich (9) der Heiz-Druckbeaufschlagungseinrichtung (7; 22).

5. Verfahren nach einem der Ansprüche 1 bis 4, **dadurch gekennzeichnet, dass** eine Mehrzahl von Abschnitten des hergestellten Breit-Faserbandes (2) zu einem Laminat-Schichtaufbau weiterverarbeitet wird.

6. Vorrichtung (1) zur Herstellung eines Faserverbundwerkstoffes in Form eines mit einem Polymer imprägnierten Breit-Faserbandes (2)
- mit einer Transporteinrichtung (3) zum Zuführen einer Mehrzahl von vorgefertigten Einzel-Faserbänders (4) und zum Transportieren der Einzel-Faserbänder (4) längs eines Bearbeitungsweges (B),
- mit einer Heiz-Druckbeaufschlagungseinrichtung (7; 22), in der die Einzel-Faserbänder (4) zusammengeführt werden, wobei die Einzel-Faserbänder (4) in einem Eintrittsbereich (9) in die Heiz-Druckbeaufschlagungseinrichtung (7; 22) nebeneinander so gefördert werden, dass benachbarte Seitenkanten (10a) der zusammengeführten Einzel-Faserbänder (4) in Stoßbereichen aneinander anliegen,
- mit mindestens einer Heizeinheit (13) zum Heizen der nebeneinander geförderten Einzel-Faserbänder (4) mit der Heiz-Druckbeaufschlagungseinrichtung (7; 22) auf eine Temperatur oberhalb eines Schmelzpunktes des Polymers, wobei das Heizen über eine gesamte Breite der Einzel-Faserbänder (4) quer (y) zu deren Förderrichtung (x) erfolgt,
- mit einer Druckeinheit (10, 11; 23) zum Aufbringen eines Drucks auf die nebeneinander geförderten, aufgeheizten Einzel-Faserbänder (4) mit der Heiz-Druckbeaufschlagungseinrichtung (7; 22),
- mit einer Temperiereinheit (13) zum Halten der zusammengeführten Einzel-Faserbänder (4) in einem Bearbeitungstemperaturbereich oberhalb des Polymer-Schmelzpunktes, bis die Stoßbereiche der zusammengeführten Einzel-Faserbänder (4) miteinander verschweißen,
- **dadurch gekennzeichnet, dass** die Heiz-Druckaufschlagungseinrichtung (7) eine Scher-Vibrationsbeaufschlagungseinheit (21) aufweist, mit der auf die zusammengeführten Einzel-Faserbänder (4) eine Scherkraft ausgeübt wird, die senkrecht auf einer Förderrichtung (x) und senkrecht auf einer Band-Normalen (z) steht.

7. Vorrichtung nach Anspruch 6, **gekennzeichnet durch** eine Abkühleinheit (17; 26) zum Abkühlen der zum Breit-Faserband (2) miteinander verschweißten Einzel-Faserbänder (4).

8. Vorrichtung nach einem der Ansprüche 6 bis 7, **dadurch gekennzeichnet, dass** die Heiz-Druckbeaufschlagungseinrichtung (7) zwei miteinander zusammenwirkende Pressstempel (10, 11) aufweist, von denen insbesondere mindestens einer konvex ausgeführt ist.

9. Vorrichtung nach einem der Ansprüche 6 bis 7, **dadurch gekennzeichnet, dass** die Heiz-Druckbeaufschlagungseinrichtung (22) mindestens ein Walzenpaar (23, 26) aufweist.

10. Vorrichtung nach einem der Ansprüche 6 bis 9, **gekennzeichnet durch** eine Vorheizeinheit (16) zum Vorheizen der Einzel-Faserbänder (4) vor dem Zusammenführen in den Eintrittsbereich (9) der Heiz-Druckbeaufschlagungseinrichtung (7).

11. Vorrichtung nach einem der Ansprüche 6 bis 10, **gekennzeichnet durch** eine Lege- und Laminiervorrichtung (20) zur Herstellung eines Laminat-Schichtaufbaus aus einer Mehrzahl von Abschnitten der hergestellten Breit-Faserbänder (2)

12. Breit-Faserband, **dadurch gekennzeichnet, dass** es durch ein Verfahren nach einem der Ansprüche 1 bis 5 hergestellt wird.

13. Mehrschicht-Verbundstruktur mit mindestens zwei Lagen, die als Abschnitte des Breit-Faserbandes nach Anspruch 12 gestaltet sind.

## Claims

1. Method for producing a fibre composite material in the form of at least one wide fibre strip (2) impregnated with a polymer, comprising the following steps:
- providing a plurality of prefabricated individual fibre strips (4), which each have a filament structure impregnated with the polymer,
- bringing the individual fibre strips (4) together in a heating/pressure-application device (7; 22), the individual fibre strips (4) being fed into the heating/pressure-application device (7; 22) next to one another in an entry region (9) in such a manner that adjacent lateral edges (10a) of the individual fibre strips (4) that have been brought together lie against one another in abutment regions,
- heating the individual fibre strips (4) fed next to one another by the heating/pressure-application device (7; 22) to a temperature above a melting point of the polymer, the heating taking place over an entire width of the individual fibre strips (4) transversely (y) to their feeding direction (x),
- applying a pressure to the heated-up individual fibre strips (4) fed next to one another by the heating/pressure-application device (7; 22),
- keeping the individual fibre strips (4) that have been brought together in a processing temperature range above the polymer melting point until the abutment regions of the individual fibre strips (4) that have been brought together have fused together,
- cooling down the individual fibre strips (4) that have fused together to form the wide fibre strip (2),
**characterized in that** during the heating a shearing/vibrating action is applied to the individual fibre strips (4) that have been brought together by the heating/pressure-application device (7; 22), a shearing force that is perpendicular to a feeding direction (x) and perpendicular to a normal (z) to the strip being exerted on the individual fibre strips (4) along a shearing-force application device (y).

2. Method according to Claim 1, **characterized in that** the production is performed in such a way that a strip thickness of the wide fibre strip (2) produced is less than the strip thickness of the individual fibre strips (4).

3. Method according to either of Claims 1 and 2, **characterized in that** the heated-up and fused-together individual fibre strips (4) are cooled down below a lower temperature limit of the temperature processing range while the pressure is still being applied by the heating/pressure-application device (7; 22).

4. Method according to one of Claims 1 to 3, **characterized by** a preheating of the individual fibre strips (4) before they are brought together into the entry region (9) of the heating/pressure-application device (7; 22).

5. Method according to one of Claims 1 to 4, **characterized in that** a plurality of portions of the wide fibre strip (2) produced are further processed to form a laminate layer structure.

6. Device (1) for producing a fibre composite material in the form of a wide fibre strip (2) impregnated with a polymer
- with a transporting device (3) for feeding a plurality of prefabricated individual fibre strips (4) and for transporting the individual fibre strips (4) along a processing path (B),
- with a heating/pressure-application device (7; 22), in which the individual fibre strips (4) are brought together, the individual fibre strips (4) being fed into the heating/pressure-application device (7; 22) next to one another in an entry region (9) in such a manner that adjacent lateral edges (10a) of the individual fibre strips (4) that have been brought together lie against one another in abutment regions,
- with at least one heating unit (13) for heating the individual fibre strips (4) fed next to one another by the heating/pressure-application device (7; 22) to a temperature above a melting point of the polymer, the heating taking place over an entire width of the individual fibre strips (4) transversely (y) to their feeding direction (x),
- with a pressure unit (10, 11; 23) for applying a pressure to the heated-up individual fibre strips (4) fed next to one another by the heating/pressure-application device (7; 22),
- with a temperature-control unit (13) for keeping the individual fibre strips (4) that have been brought together in a processing temperature range above the polymer melting point until the abutment regions of the individual fibre strips (4) that have been brought together have fused together,
**characterized in that** the heating/pressure-application device (7) has a shearing/vibrating application unit (21), with which a shearing force that is perpendicular to a feeding direction (x) and perpendicular to a normal (z) to the strip is exerted on the individual fibre strips (4) that have been brought together.

7. Device according to Claim 6, **characterized by** a cooling unit (17; 26) for cooling down the individual fibre strips (4) that have fused together to form the wide fibre strip (2).

8. Device according to either of Claims 6 and 7, **characterized in that** the heating/pressure-application device (7) has two pressing dies (10, 11) interacting with one another, at least one of which in particular is convexly formed.

9. Device according to either of Claims 6 and 7, **characterized in that** the heating/pressure-application device (22) has at least one pair of rollers (23, 26).

10. Device according to one of Claims 6 to 9, **characterized by** a preheating unit (16) for preheating the individual fibre strips (4) before they are brought together into the entry region (9) of the heating/pressure-application device (7).

11. Device according to one of Claims 6 to 10, **characterized by** a laying and laminating device (20) for producing a laminate layer structure from a plurality of portions of the wide fibre strips (2) produced.

12. Wide fibre strip, **characterized in that** it is produced by a method according to one of Claims 1 to 5.

13. Multi-layer composite structure comprising at least two layers, which are formed as portions of the wide fibre strip according to Claim 12.

## Revendications

1. Procédé de fabrication d'un matériau composite fibreux sous la forme d'au moins une large bande de fibres (2) imprégnée d'un polymère, avec les étapes suivantes :
- fourniture d'une pluralité de bandes de fibres individuelles (4) préfabriquées qui présentent respectivement une structure filamentaire imprégnée du polymère,
- réunion des bandes de fibres individuelles (4) dans un appareil de chauffage et de pression (7 ; 22), les bandes de fibres individuelles (4) étant, dans une zone d'entrée (9), transportées de façon juxtaposée dans l'appareil de chauffage et de pression (7 ; 22) de telle sorte que des arêtes latérales (10a) voisines des bandes de fibres individuelles (4) réunies sont adjacentes les unes aux autres dans des zones d'aboutement,
- chauffage, avec l'appareil de chauffage et de pression (7 ; 22), des bandes de fibres individuelles (4) transportées de façon juxtaposée à une température supérieure à un point de fusion du polymère, le chauffage s'effectuant sur une largeur totale des bandes de fibres individuelles (4) transversalement (y) à leur direction de transport (x),
- application, avec l'appareil de chauffage et de pression (7 ; 22), d'une pression sur les bandes de fibres individuelles (4) chauffées transportées de façon juxtaposée,
- maintien des bandes de fibres individuelles (4) réunies dans une plage de température de traitement supérieure au point de fusion du polymère jusqu'à ce que les zones d'aboutement des bandes de fibres individuelles (4) réunies soient assemblées par soudage,
- refroidissement des bandes de fibres individuelles (4) assemblées par soudage pour former la large bande de fibres (2),
**caractérisé en ce que**,
pendant le chauffage, une vibration de cisaillement est appliquée avec l'appareil de chauffage et de pression (7 ; 22) sur les bandes de fibres individuelles (4) réunies, une force de cisaillement étant exercée le long d'un appareil d'application de force de cisaillement (y) sur les bandes de fibres individuelles (4), laquelle est perpendiculaire à une direction de transport (x) et perpendiculaire à une normale aux bandes (z).

2. Procédé selon la revendication 1, **caractérisé en ce que** la fabrication s'effectue de telle sorte qu'une épaisseur de bande de la large bande de fibres (2) fabriquée est plus faible que la largeur de bande des bandes de fibres individuelles (4).

3. Procédé selon l'une des revendications 1 à 2, **caractérisé en ce que** les bandes de fibres individuelles (4) chauffées et assemblées par soudage sont encore refroidies pendant l'application de la pression avec l'appareil de chauffage et de pression (7 ; 22) au-dessous d'une limite inférieure de température de la plage de traitement par la température.

4. Procédé selon l'une des revendications 1 à 3, **caractérisé par** un préchauffage des bandes de fibres individuelles (4) avant la réunion dans la zone d'entrée (9) de l'appareil de chauffage et de pression (7 ; 22).

5. Procédé selon l'une des revendications 1 à 4, **caractérisé en ce qu'**une pluralité de tronçons de la large bande de fibres (2) fabriquée continuent à être traités pour former une structure en couches stratifiée.

6. Dispositif (1) destiné à la fabrication d'un matériau composite fibreux sous la forme d'une large bande de fibres (2) imprégnée d'un polymère
- avec un dispositif de transport (3) pour l'acheminement d'une pluralité de bandes de fibres individuelles (4) préfabriquées et pour le transport des bandes de fibres individuelles (4) le long d'une voie de traitement (B),
- avec un appareil de chauffage et de pression (7 ; 22) dans lequel les bandes de fibres individuelles (4) sont réunies, les bandes de fibres individuelles (4) étant, dans une zone d'entrée (9), transportées de façon juxtaposée dans l'appareil de chauffage et de pression (7 ; 22) de telle sorte que des arêtes latérales (10a), voisines entre elles, des bandes de fibres individuelles (4) sont adjacentes les unes aux autres dans des zones d'aboutement,
- avec au moins une unité de chauffage (13) destinée à chauffer avec l'appareil de chauffage et de pression (7 ; 22) les bandes de fibres individuelles (4) transportées de façon juxtaposée à une température supérieure à un point de fusion du polymère, le chauffage s'effectuant sur une largeur totale des bandes de fibres individuelles (4) transversalement (y) à leur direction de transport (x),
- avec une unité de pression (10, 11 ; 23) destinée à appliquer avec l'appareil de chauffage et de pression (7 ; 22) une pression sur les bandes de fibres individuelles (4) chauffées transportées de façon juxtaposée,
- avec une unité de régulation de température (13) destinée à maintenir les bandes de fibres individuelles (4) réunies dans une plage de température de traitement supérieure au point de fusion du polymère jusqu'à ce que les zones d'aboutement des bandes de fibres individuelles (4) réunies s'assemblent par soudage,
- **caractérisé en ce que**
l'appareil de chauffage et de pression (7) présente une unité d'application de vibrations de cisaillement (21) avec laquelle une force de cisaillement est exercée sur les bandes de fibres individuelles (4) réunies qui est perpendiculaire à une direction de transport (x) et perpendiculaire à une normale aux bandes (z).

7. Dispositif selon la revendication 6, **caractérisé par** une unité de refroidissement (17 ; 26) destinée à refroidir les bandes de fibres individuelles (4) assemblées par soudage pour former la large bande de fibres (2).

8. Dispositif selon l'une des revendications 6 à 7, **caractérisé en ce que** l'appareil de chauffage et de pression (7) présente deux matrices de pressage (10, 11) coopérant entre elles dont au moins l'une en particulier est réalisée de façon convexe.

9. Dispositif selon l'une des revendications 6 à 7, **caractérisé en ce que** l'appareil de chauffage et de pression (22) présente au moins une paire de rouleaux (23, 26).

10. Dispositif selon l'une des revendications 6 à 9, **caractérisé par** une unité de préchauffage (16) destinée à préchauffer les bandes de fibres individuelles (4) avant la réunion dans la zone d'entrée (9) de l'appareil de chauffage et de pression (7).

11. Dispositif selon l'une des revendications 6 à 10, **caractérisé par** un dispositif de pose et de stratification (20) destiné à la fabrication d'une structure en couches stratifiée à partir d'une pluralité de tronçons des larges bandes de fibres (2) fabriquées.

12. Large bande de fibres, **caractérisée en ce qu'**elle est fabriquée par un procédé selon l'une des revendications 1 à 5.

13. Structure composite multicouche avec au moins deux nappes qui sont formées en tant que tronçons de la large bande de fibres selon la revendication 12.
